# EUROPEAN PATENT SPECIFICATION

(11) **EP 3 263 279 B1**
(45) Date of publication and mention of the grant of the patent: **15.12.2021**
(21) Application number: 17177905.1
(22) Date of filing: 26.06.2017
(51) Int. Cl.: B25B 27/30

(54) **MACHINE FOR ASSEMBLING/DISASSEMBLING SPRING/DAMPER UNITS OF SUSPENSIONS OF VEHICLES HAVING A SIMPLIFIED STRUCTURE**
MASCHINE ZUR MONTAGE/DEMONTAGE VON FEDER-/DÄMPFEREINHEITEN DER AUFHÄNGUNG VON FAHRZEUGEN MIT EINER VEREINFACHTEN STRUKTUR
MACHINE POUR LE MONTAGE/DÉMONTAGE DE ENSEMBLES RESSORT/AMORTISSEUR DE SUSPENSIONS DE VÉHICULES PRÉSENTANT UNE STRUCTURE SIMPLIFIÉE

(30) Priority: 27.06.2016 IT UA20164667
(43) Date of publication of application: 03.01.2018
(73) Proprietor: Govoni S.r.l., 40014 Crevalcore (BO) (IT)
(72) Inventor: VERRILLO, Davide, 41051 CASTELNUOVO RANGONE MO (IT); VERRILLO, Antonio, 40017 SAN GIOVANNI IN PERSICETO BO (IT); MITRATI, Marco, 40017 SAN GIOVANNI IN PERSICETO BO (IT)
(74) Representative: Modiano, Micaela Nadia

(56) References cited:
- EP-A2- 1 810 791
- DE-A1- 2 813 381
- DE-A1- 3 021 084
- FR-A1- 2 055 745
- US-A1- 2010 283 193

## Description

The present invention relates to a machine for assembling/disassembling spring/damper units of suspensions of vehicles having a simplified structure.

In the field of workshop work for vehicle maintenance, it is known to have to intervene on their suspensions, for example to replace the damper.

Once the spring/damper unit has been disassembled from the vehicle, it is necessary to compress the spring to disengage the damper and extract it from its own seat to then insert a new one and finally release the spring to restore the original configuration of the unit and be able to reinstall it on the vehicle.

Equipment of the manual type and of the automatically actuated type is known for performing these interventions.

Automatic equipment of the known type, so-called damper dismantling machines, are constituted essentially by a frame for supporting a bracket for the resting of the lower end of the spring and a pneumatic cylinder which acts in a vertical direction and the movable stem of which translates alternately a horizontal crossmember that is connected to two clamps adapted to be tightened at the upper end of the spring.

The crossmember is associated so that it can slide along two vertical guides.

Each clamp is pivoted so that it can rotate about a horizontal axis at the end of a respective arm which oscillates on the horizontal plane connected to the crossmember, which translates the clamps alternately in a vertical direction. In this manner, the position of the clamps can adapt to different diameters and inclinations of the turns of the spring.

The actuation of the pneumatic cylinder allows to compress or release the spring respectively for the disassembly or assembly of the damper.

These machines of the known type are not free from drawbacks, which include the fact that the presence of two vertical guides increases the complexity of the structure of the machine and increases the number of components required.

Furthermore, if the crossmember that supports the clamps and can slide along the two vertical guides is tilted slightly due to different reaction forces applied by the compressed spring to the clamps, there is the risk that the sliding of said crossmember might jam, or might be difficult, requiring an extraordinary maintenance intervention.

FR 2 055 745 discloses a damper dismantling machine having a combination of features as set forth in the pre-characterizing portion of the appended claim 1.

The aim of the present invention is to eliminate the drawbacks noted above of the background art, providing a machine for assembling/disassembling spring/damper units having a simplified structure and a reduced number of components, so to reduce its production times and costs.

Within this aim, an object of the present invention is to provide a machine for assembling/disassembling spring/damper units that is safe and easy in use as well as reliable over time.

In accordance with the invention, there is provided a machine for assembling/disassembling spring/damper units of suspensions as defined in the appended claims.

Further characteristics and advantages of the present invention will become better apparent from the detailed description of a preferred but not exclusive embodiment of a machine for assembling/disassembling spring/damper units of suspensions of vehicles having a simplified structure, illustrated by way of nonlimiting example in the accompanying drawings, wherein:

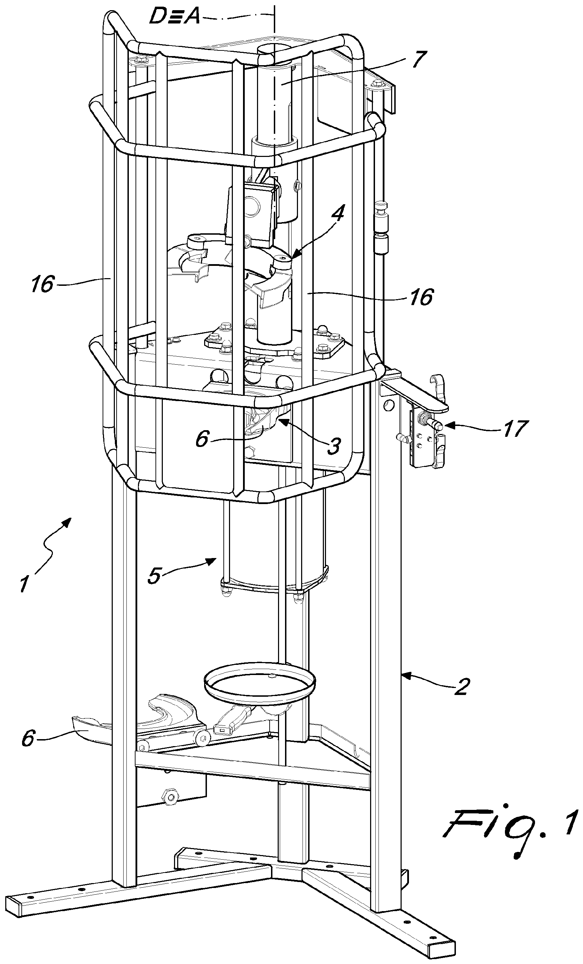

Figure 1 is a perspective view of a machine for assembling/disassembling spring/damper units of suspensions of vehicles having a simplified structure, according to the invention;

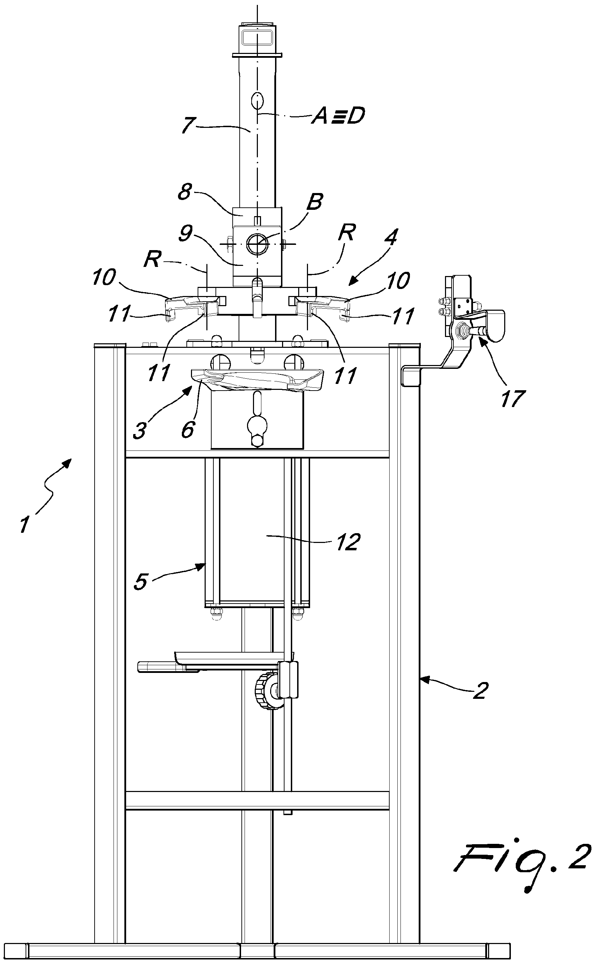

Figure 2 is a front and partial view of the machine according to the invention;

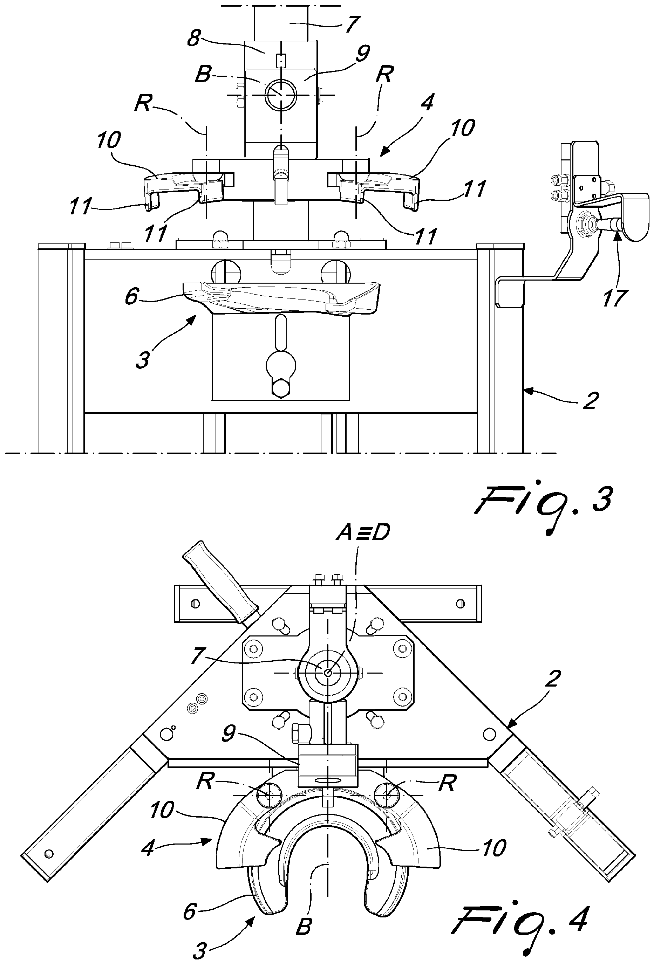

Figure 3 is an enlarged-scale view of a portion of Figure 2 related to the grip means;
Figure 4 is a plan view of Figure 3;

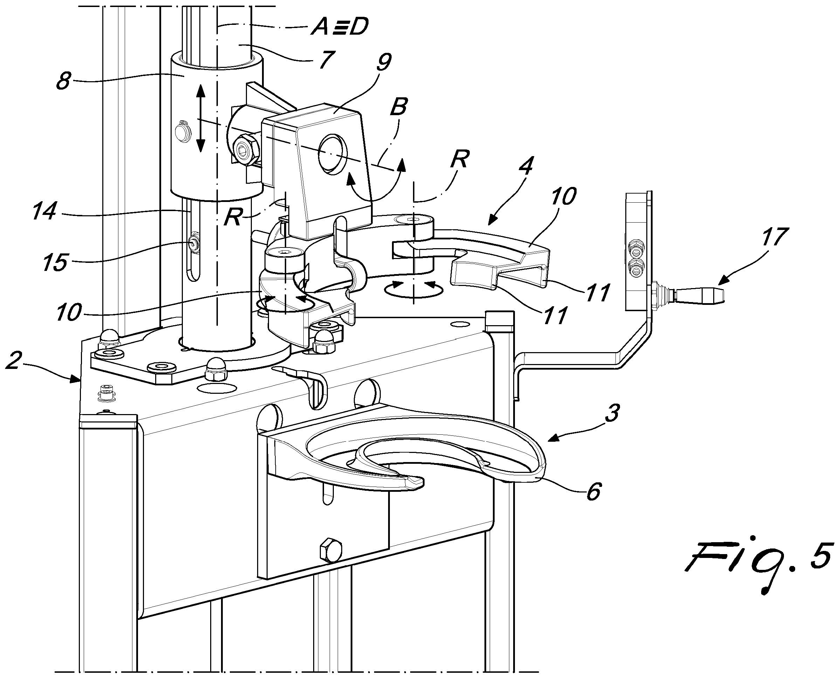

Figure 5 is an axonometric view of Figure 3;
Figure 6 is a front and partial view of the machine according to the invention during the loading of a spring/damper unit;
Figure 7 is an enlarged-scale view of a portion of Figure 6 related to the grip means;
Figure 8 is an axonometric view of Figure 7;

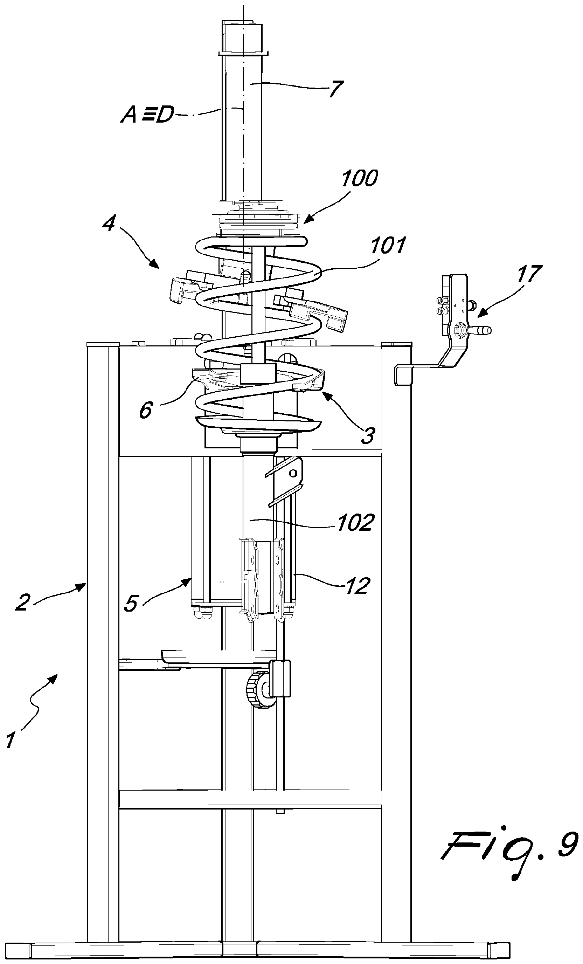

Figure 9 is a front and partial view of the machine according to the invention during the compression of the spring of a spring/damper unit;

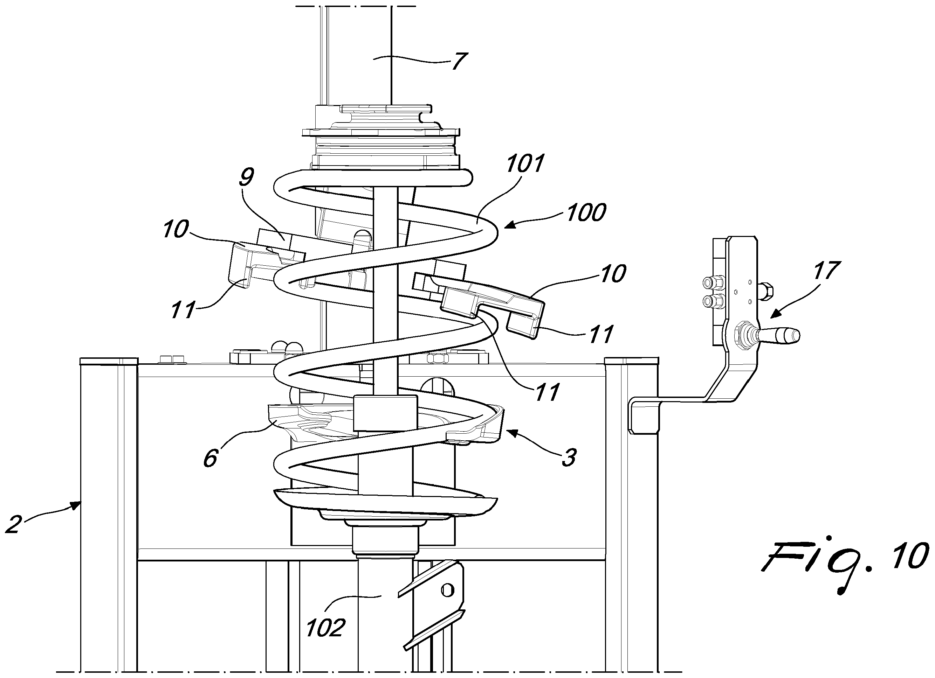

Figure 10 is an enlarged-scale view of a portion of Figure 9 related to the grip means;

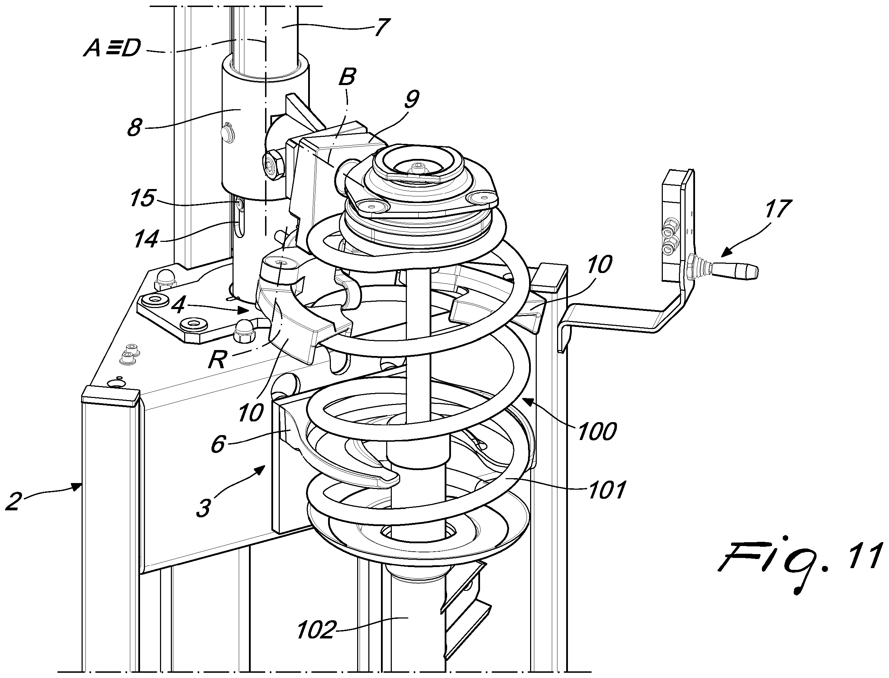

Figure 11 is an axonometric view of Figure 10.

With particular reference to the figures, the reference numeral 1 designates generally a machine for assembling/disassembling spring/damper units of suspensions of vehicles having a simplified structure.

The machine 1 comprises a frame 2 for supporting means 3 for the lower resting contact of a spring 101 of a conventional spring/damper unit, 100, of the type used in the suspensions of vehicles, means 4 for gripping from above the spring 101, and means 5 for actuating with an alternating translational motion along a substantially vertical work direction D which are associated with the grip means 4 in order to move them toward/away from the resting means 3 so as to obtain the compression/release of the spring 101 to replace the damper 102 of the unit 100.

The frame 2 comprises a set of assembled profiles which form, in the lower part, a ground resting element and, in the upper part, the work area, which is enclosed by appropriate protections 16 of the known type.

The resting means 3 comprise at least one bracket 6 which is contoured as a function of the geometry of the spring 101 on which one must intervene, supported in a cantilever manner by the frame 2. It is possible to provide different brackets 6 which have different configurations to be used alternatively as a function of the geometry of the spring 101. In the illustrated embodiment, the machine 1 is provided with two brackets 6 which can be arranged alternately in the work region.

The machine 1 comprises a single element 7 for the sliding guiding of the grip means 4 along a translation axis A which substantially coincides with the work direction D.

The grip means 4 comprise a supporting body 8 which is associated slidingly along the guiding element 7 and an element 9 which supports a pair of clamps 10 that can be associated with the spring 101 that is associated with the supporting body 8 so that it can oscillate about a horizontal oscillation axis B. Furthermore, the clamps 10 are associated with the supporting element 9 so that they are pivoted about respective rotation axes R which are substantially perpendicular to the plane of arrangement of said clamps.

The supporting element 9 is constituted by a block which is pivoted to the supporting body 8 and below which there is an arc-like sector to the ends of which the clamps 10 are pivoted.

The oscillation of the supporting element 9 together with the clamps 10 about the oscillation axis B allows the grip means 4 to adapt to different inclinations of the turns of the spring 101 and to vary their angular position as a function of its deformation during compression/release.

It is possible to provide elements, not shown, for limiting the breadth of oscillation that is possible between the supporting body 8 and the supporting element 9.

The rotation of the camps 10 about the respective rotation axes are allowed to adjust their opening as a function of the diameter of the spring 101.

It is possible to provide means, not shown, for temporarily locking the rotation of the clamps 10 about the respective rotation axes R in order to maintain the desired opening.

In this manner, the grip means 4 are used universally as the type of spring 101 on which one must intervene varies.

Each clamp 10 is constituted by an arc-like portion which has a horizontal arrangement when the supporting element 9 is not rotated with respect to the supporting body 8.

Two mutually opposite profiles 11 which protrude downward and are suitable to contain the corresponding turn of the spring 101 are provided at the free ends of each clamp 10.

Advantageously, the guiding element 7 has a tubular shape so as to form an internal longitudinal cavity and the actuation means 5 comprise a cylinder 12 that is supported by the lower part of the frame 2, the stem of which, not visible in the figures, can move along the longitudinal cavity of the guiding element 7. At the opposite sides of the guiding element 7 there are respective longitudinal slots 14, only one of which is visible in the figures, through which a pin 15 is inserted which connects the end of the stem of the cylinder 12 to the supporting body 8, which has the shape of a sleeve that is fitted along the guiding element 7.

The cylinder 12 is of the pneumatic type and is associated with an actuation circuit with corresponding safety devices, not shown in detail, which provides control elements 17 that can be operated by an operator.

The stem of the cylinder 12 is substantially coaxial to the tubular guiding element 7, so that the work direction D and the translation axis A substantially coincide.

The operation of the present invention is as follows.

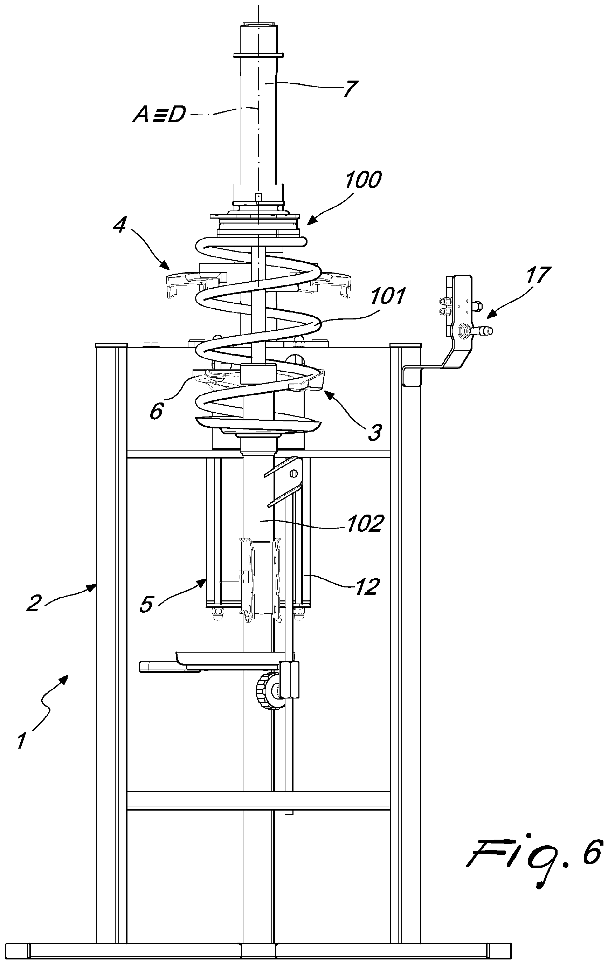

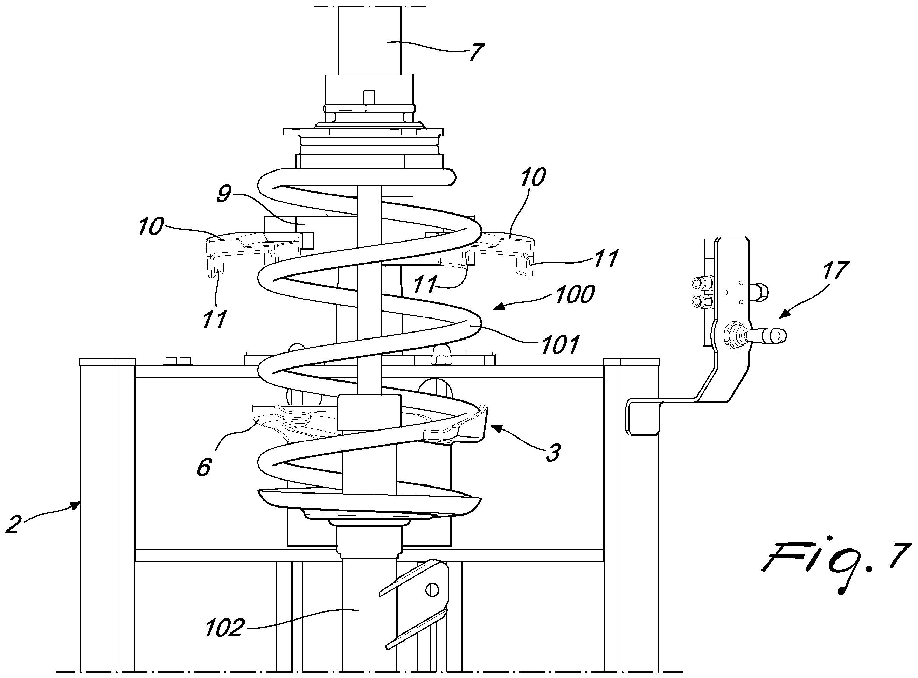

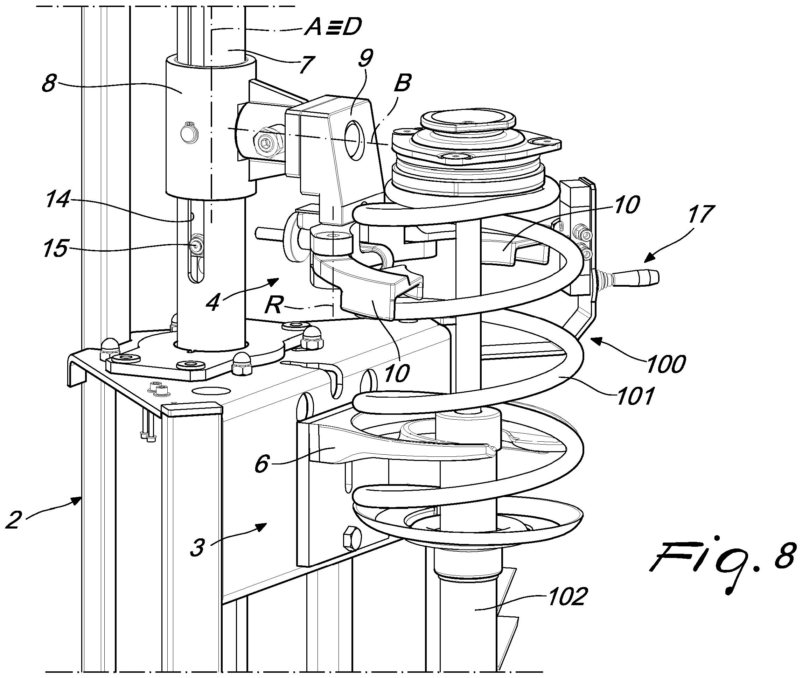

During disassembly, after arranging the spring/damper unit 100 with the spring 101 resting on the bracket 6 and the clamps 10 still disengaged from said spring (Figures 6-8), the operator adjusts the position of the clamps 10 so as to arrange them on a turn at the upper end of said spring and actuates the sliding of the grip means 4 in the direction toward the bracket 6 by acting on the actuation elements 17 of the cylinder 12, which are not shown in detail since they are of a conventional type.

Once the damper 102 has been removed and replaced, with the clamps 10 still gripping the spring 101, the upward translation of the grip means 4 is actuated until the spring 101 is released completely.

At this point the operator disengages the clamps 10 and removes the spring/damper unit 100 from the machine 1.

In practice it has been found that the described invention achieves the intended aim and objects, and in particular the fact is stressed that the damper dismantling machine according to the invention has a simple structure and a modest number of component parts, entailing reduced production times and costs with respect to conventional machines.

Furthermore, the machine according to the invention can be used universally as the shape of the spring/damper unit changes, is practical and safe to use and is reliable over time.

## Claims

1. A machine (1) for assembling/disassembling spring/damper units of suspensions of vehicles, comprising a frame (2) for supporting means (3) for the lower resting contact of a spring (101) of a spring/damper unit (100), means (4) for gripping from above said spring (101) and means (5) for actuation with an alternating translational motion along a substantially vertical work direction (D) which are associated with said grip means (4), the machine (1) comprising a single element (7) for the sliding guiding of said grip means (4) along a substantially vertical translation axis (A) and in that said grip means (4) comprise a supporting body (8) that is associated slidingly along said guiding element (7) and an element (9) that supports a pair of clamps (10) that can be associated with the spring (101), the supporting element (9) being associated with said supporting body (8) so that it can rotate about a substantially horizontal axis (B) and each one of the clamps (10) being associated with said supporting element (9) so that it can rotate about a respective rotation axis (R) that is substantially perpendicular to the plane of arrangement of said clamps, **characterized in that** said guiding element (7) has a tubular shape so as to form an internal longitudinal cavity and **in that** said actuation means (5) comprise a pneumatic type cylinder (12), the corresponding stem of which can move within said internal longitudinal cavity, the supporting body (8) being rendered integral in translation with the movable stem by means of at least one pin (15) that is inserted so that it passes through at least one longitudinal slot (14) formed on the guiding element (7).

2. The machine (1) according to claim 1, **characterized in that** said supporting body (8) comprises a sleeve that is associated slidingly with the outside of said guiding element (7).

3. The machine (1) according to claim 1, **characterized in that** the stem of said cylinder (12) and said guiding element (7) are substantially coaxial, the work direction (D) and the translation axis (A) substantially coinciding with each other.

4. The machine (1) according to one or more of the preceding claims, **characterized in that** each one of said clamps (10) comprises a pair of mutually opposite profiles (11) which protrude downward and are adapted to contain the corresponding turn of the spring (101).

## Patentansprüche

1. Eine Maschine (1) zur Montage/Demontage von Feder-/ Dämpfereinheiten von Aufhängungen von Fahrzeugen, die Folgendes umfasst: einen Rahmen (2) zum Tragen von Mitteln (3) für den unteren Auflagekontakt einer Feder (101) einer Feder-/ Dämpfereinheit (100), Mittel (4) zum Greifen der Feder (101) von oben und Mittel (5) zum Antreiben mit einer alternierenden Translationsbewegung in einer im Wesentlichen vertikalen Arbeitsrichtung (D), die mit den Greifmitteln (4) verbunden sind; wobei die Maschine (1) ein einzelnes Element (7) zur Gleitführung der Greifmittel (4) entlang einer im Wesentlichen vertikalen Translationsachse (A) umfasst, und dadurch, dass die Greifmittel (4) einen tragenden Körper (8) umfassen, welcher gleitend entlang dem Führungselement (7) angeschlossen ist, und ein Element (9), das ein Paar von Klemmen (10) trägt, welche mit der Feder (101) verbunden werden können; wobei das tragende Element (9) so mit dem tragenden Körper (8) verbunden ist, dass es sich um eine im Wesentlichen horizontale Achse (B) drehen kann, und jede der Klemmen (10) so mit dem tragenden Element (9) verbunden ist, dass sie sich um eine entsprechende Rotationsachse (R) drehen kann, die im Wesentlichen senkrecht zur Anordnungsebene der Klemmen ist; **dadurch gekennzeichnet, dass** das Führungselement (7) eine Röhrenform hat, um einen länglichen inneren Hohlraum zu bilden, und dadurch, dass die Antriebsmittel (5) einen Zylinder (12) vom Pneumatiktyp umfassen, dessen entsprechender Schaft sich innerhalb des länglichen inneren Hohlraums bewegen kann, wobei der tragende Körper (8) in der Translation integral mit dem beweglichen Schaft gemacht wird durch mindestens einen Stift (15), der durch mindestens einen am Führungselement (7) geformten Längsschlitz (14) hindurchgeführt wird.

2. Die Maschine (1) gemäß Anspruch 1, **dadurch gekennzeichnet, dass** der tragende Körper (8) eine Hülse umfasst, die gleitend mit der Außenseite des Führungselements (7) verbunden ist.

3. Die Maschine (1) gemäß Anspruch 1, **dadurch gekennzeichnet, dass** der Schaft des Zylinders (12) und das Führungselement (7) im Wesentlichen koaxial sind, wodurch die Arbeitsrichtung (D) und die Translationsachse (A) im Wesentlichen zusammenfallen.

4. Die Maschine (1) gemäß einem oder mehreren der obigen Ansprüche, **dadurch gekennzeichnet, dass** jede der Klemmen (10) ein Paar einander entgegengesetzter Profile (11) umfasst, die nach unten ragen und ausgebildet sind, um die entsprechende Wicklung der Feder (101) aufzunehmen.

## Revendications

1. Machine (1) pour le montage/démontage d'unités de ressort/amortisseur de suspensions de véhicules, comprenant un bâti (2) destiné à supporter un moyen (3) pour le contact de repos inférieur d'un ressort (101) d'une unité de ressort/amortisseur (100), un moyen (4) pour saisir par le dessus ledit ressort (101) et un moyen (5) permettant l'actionnement avec un mouvement de translation alterné le long d'une direction de travail substantiellement verticale (D) qui est associée audit moyen de préhension (4), la machine (1) comprenant un élément simple (7) pour le guidage glissant dudit moyen de préhension (4) le long d'un axe de translation substantiellement vertical (A) et en ce que ledit moyen de préhension (4) comprend un corps de support (8) qui est associé de façon glissante le long dudit élément de guidage (7) et un élément (9) qui supporte une paire de pinces (10) qui peut être associée au ressort (101), l'élément de support (9) étant associé audit corps de support (8) de telle manière qu'il peut tourner autour d'un axe substantiellement horizontal (B) et chacune des pinces (10) étant associée audit élément de support (9) de manière telle qu'elle peut tourner autour d'un axe de rotation (R) respectif qui est substantiellement perpendiculaire au plan d'agencement desdites pinces, **caractérisée en ce que** ledit élément de guidage (7) a une forme tubulaire afin de former une cavité longitudinale interne et **en ce que** ledit moyen d'actionnement (5) comprend un vérin pneumatique (12), dont la tige correspondante peut se déplacer à l'intérieur de ladite cavité longitudinale interne, le corps de support (8) étant rendu solidaire de la tige mobile en translation au moyen d'au moins un axe (15) qui est inséré de manière à passer dans au moins une fente longitudinale (14) formée sur l'élément de guidage (7).

2. Machine (1) selon la revendication 1, **caractérisée en ce que** ledit corps de support (8) comprend un manchon qui est associé de façon glissante à la partie extérieure dudit élément de guidage (7).

3. Machine (1) selon la revendication 1, **caractérisée en ce que** la tige dudit vérin (12) et ledit élément de guidage (7) sont sensiblement coaxiaux, la direction de travail (D) et l'axe de translation (A) coïncidant sensiblement l'un avec l'autre.

4. Machine (1) selon l'une ou plusieurs des revendications précédentes, **caractérisée en ce que** chacune desdites pinces (10) comprend une paire de profils mutuellement opposés (11) qui font saillie vers le bas et qui sont adaptés pour contenir la spire correspondante du ressort (101).
